# EUROPÄISCHE PATENTANMELDUNG

(11) **EP 0 880 023 A1**
(43) Veröffentlichungstag der Anmeldung: **25.11.1998**
(21) Anmeldenummer: 97108365.4
(22) Anmeldetag: 23.05.1997
(51) Int. Cl.: G01N 21/89, B24B 49/12, B24B 27/033, B21B 38/00, B21B 45/00, B22D 11/12

(54) **Verfahren und Vorrichtung zur automatischen Detektion von Oberflächenfehlern beim kontinuierlichen mechanischem Abtragen von Material von Stranggiessprodukten**

(71) Anmelder: SIEMAG TRANSPLAN GMBH, 57250 Netphen (DE)
(72) Erfinder: Schneider, Volker Rainer, Dipl.-Ing., 57072 Siegen (DE); Braach, Hans-Joachim, 57250 Netphen (DE)
(74) Vertreter: Müller, Gerd, Dipl.-Ing.

(57) **Zusammenfassung**

Ein Verfahren zur automatischen Detektion von Oberflächenfehlern beim kontinuierlichen mechanischen Abtragen von Material von Stranggießprodukten (2), die in noch heißem Zustand in Teillängen unterteilt und vor der Fertigwalzung in einer Walzstraße einer Abtragmaschine (1), insbesondere Schleifmaschine, zugeführt werden, in der das Material des Stranggießproduktes (2) abhängig von den von einem Fehlersuchgerät (6;7) ermittelten Fehlerstellen an der bzw. den zu bearbeitenden Oberflächen mehr oder weniger intensiv abgetragen wird, sieht vor, daß die Oberflächenfehler (12a, 12b) von dem Fehlersuchgerät (6; 7) als Bildinformationen einem Bildverarbeitungsprozessor (11) zugeleitet und von einem an die Maschinensteuerung (17) angeschlossenen übergeordneten, ein integriertes Vergleichs- und Auswertemodul (15) besitzenden Rechner (13) eingelesen werden, in dem die übermittelten digitalen Bildinformationen in einem Mustererkennungsprozeß mit abgespeicherten Bildern typischer Oberflächenfehler verglichen und die Ergebnisse wie Fehlerlänge und -breite sowie Fehlerfläche entweder direkt bearbeitet und nach einer Klassifikation hinsichtlich der Relevanz der Oberflächenfehler in einer koordinatenbezogenen Fehlerdatei (16) gespeichert werden oder nach dem Speichern in einer Oberflächendatei in einem folgenden Auswerteverfahren klassifiziert werden. Das Fehlersuchgerät ist als Inspektionseinheit (6, 7) ausgebildet, die mindestens eine Kamera (8) und eine Beleuchtungseinrichtung (9) aufweist, die an einer den Auflagetisch (3) überspannenden Quertraverse (14) angeordnet sind, und die Inspektionseinheit (6; 7) an den ein Vergleichs- und Auswertemodul (15) sowie eine koordinatenbezogene Fehlerdatei (16) besitzenden Rechner (13) angeschlossen ist.

## Beschreibung

Die Erfindung betrifft ein Verfahren zur automatischen Detektion Von Oberflächenfehlern beim kontinuierlichen mechanischen Abtragen Von Material von Stranggießprodukten, die in noch heißem Zustand in Teillängen unterteilt und vor der Fertigwalzung in einer Walzstraße einer Abtragmaschine, insbesondere Schleifmaschine, zugeführt werden, in der das Material des Stranggießproduktes generell oder abhängig von den von einem Fehlersuchgerät ermittelten Fehlerstellen an der bzw. den zu bearbeiteten Oberflächen mehr oder weniger intensiv abgetragen wird, sowie eine Vorrichtung zum Durchführen des Verfahrens.

Die nach modernen Herstellungsverfahren durch Stranggießen erzeugten Vorprodukte wie Brammen, Blöcke und Knüppel aus Stahl und NE-Metall-Legierungen stellen den Ausgangspunkt für vielfältige hochwertige Metallerzeugnisse, z.B. Stahlbleche oder Drähte dar. In solchen Stranggießanlagen werden ein oder mehrere endlose Gußstränge erzeugt, die nach Durchlaufen einer Kühl- und Biegestrecke von einer mitfahrenden Brennschneid- oder Schereneinrichtung in noch heißem Zustand in Teilstücke unterteilt werden. Die Fertigerzeugnisse werden anschließend - gegebenenfalls nach vorherigem Erhitzen der Teillängen - in einer Walzstraße hergestellt. Dabei werden verfahrenstechnisch bedingte Oberflächenfehler, beispielsweise Risse, flächige Vertiefungen und Kerben, mit ausgewalzt, was die Qualität der hergestellten Fertigerzeugnisse bis zur Unbrauchbarkeit mindern kann. Dies gilt in besonderem Maße bei Edelstahlblechen mit hohen Anforderungen an die Oberflächengüte, so daß derartige Mängel nicht akzeptiert werden. Vor allem bei Vorprodukten aus hochwertigen Materialien ist es daher üblich, diese vor der Fertigwalzung in speziellen Hochdruck-Schleifmaschinen durch Überschleifen der Oberflächen zu bearbeiten. Daneben ist es aber auch bekannt, das Material von den Oberflächen durch Hobeln oder Fräsen abzutragen.

Ein Abtragverfahren der eingangs genannten Art ist durch die EP-B-0 053 274 bekanntgeworden. Damit sich unter geringstmöglichem Materialabtrag über die gesamte Bearbeitungsbreite eine verbesserte und für die Weiterverarbeitung vorteilhafte Oberflächenqualität erreichen läßt, wird der Abtragvorgang durch vorgewählte Vorschubwege reversierend in Brammenlängs- oder -querrichtung ausgeführt und dabei in Abhängigkeit von auftretenden Obenlachenfehlern intensiviert. Den spanabhebenden Werkzeugen, insbesondere Schleifscheiben, ist ein Fehlersuchgerät (Detektor oder Videogerät) vorgeordnet, das die Oberflächen ständig auf Fehlerquellen abtastet und entsprechend den Abtragvorgang durch auftretende Fehlersignale intensiver gestaltet. Die spanabhebenden Werkzeuge können demzufolge mehr oder weniger gegen die Oberfläche des Stranges bzw. der Teillänge angestellt werden.

Wenngleich somit beim mechanischen Abtragen von Material von Stranggießprodukten der Einsatz eines Detektors oder eines Videogerätes bekannt ist, so werden diese Fehlersuchgeräte im praktischen Betrieb - wenn überhaupt - doch nur zur manuellen Nachbearbeitung eingesetzt. Die Oberflächen der Stranggießprodukte werden nämlich in der Regel nach einem ersten generellen Überschliff durch einen Bediener der Schleifmaschine per Augenschein inspiziert, der Fehlstellen kennzeichnet und manuell gesteuert mit der Maschine nachbearbeitet. Dabei wird so vorgegangen, daß die Oberflächenbearbeitung zur Inspektion des Vorprodukts (Bramme, Knüppel, Block) unterbrochen und das Vorprodukt mit Hilfe des Arbeits- bzw. Auflagetisches der Abtragmaschine aus einer diese einkapselnden Kabine transportiert wird. Zur Inspektion muß der Bediener danach den Maschinenleitstand verlassen, der sich nicht immer in unmittelbarer Nähe der Abtragmaschine befindet. Die Fehlersuche und Beurteilung, ob eine Nachbearbeitung erforderlich ist, hängt damit von der Qualifikation und Sichtweise des Bedieners ab, so daß eine gleichbleibende Qualität nur schwer sicherzustellen ist. Der Bediener kennzeichnet die ausgemachten Fehlstellen manuell, z.B. mit Farbe, und fährt diese dann zur Nachbearbeitung mit Hilfe der Videokamera handgesteuert an. Dies ist aufgrund der Umgebungsbedingungen, z.B. Hitze, Staub etc., und der damit einhergehenden schlechten Sichtverhältnisse oft ein schwieriges und zeitintensives Unterfangen. Schließlich ist die Maximaltemperatur des Vorproduktes wegen des erforderlichen direkten Kontaktes zum Bediener begrenzt. Das steht im Widerspruch zum Bestreben der Betreiber, das Abtragen bei möglichst hohen Temperaturen vorzunehmen, was seinen Grund darin findet, daß Metalle bzw. Metallegierungen bei höheren Temperaturen leichter zu bearbeiten sind und es aus energietechnischer Sicht nicht zweckmäßig ist, die heißen Stranggießprodukte abzukühlen, zu inspizieren und dann die Oberflächenbearbeitung durchzuführen, um sie danach zur Weiterbearbeitung doch wieder aufheizen zu müssen. Es werden folglich bei Brammen Arbeitstemperaturen angestrebt, die zwischen ca. 250 und 800°C liegen.

Der Erfindung liegt daher die Aufgabe zugrunde, ein Verfahren und eine Vorrichtung zum Durchführen des Verfahrens zu schaffen, mit denen sich die vorgenannten Nachteile vermeiden und die Wirtschaftlichkeit sowie Qualität bei der Oberflächenbearbeitung verbessern lassen, sowie die Bearbeitung sich insbesondere in einen automatischen, rechnergesteuerten Prozeß einbinden läßt.

Diese Aufgabe wird gemäß einem Verfahren erfindungsgemäß dadurch gelöst, daß die Oberflächenfehler von dem Fehlersuchgerät als Bildinformationen einem Bildverarbeitungsprozessor zugeleitet und von einem an die Maschinensteuerung angeschlossenen übergeordneten, ein integriertes Vergleichs- und Auswertemodul besitzenden Rechner eingelesen werden, in dem die übermittelten digitalen Bildinformationen in einem Mustererkennungsprozeß mit abgespeicherten Bildern typischer Oberflächenfehler verglichen und die Ergebnisse wie Fehlerlänge- und -breite sowie -fläche entweder direkt bearbeitet und nach einer Klassifikation hinsichtlich der Relevanz der Oberflachenfehler in einer koordinatenbezogenen Fehlerdatei gespeichert werden oder nach dem Speichern in einer Oberflächendatei in einem folgenden Auswerteverfahren klassifiziert werden. Alternativ besteht auch die Möglichkeit, die gesamte Oberflächen-Topologie abzuspeichern bzw. auf einem Bildschirm aufzuzeigen. Es läßt sich somit eine automatisierte, rechnergesteuerte logistische, durchgängige Prozeßführung- und -verfolgung sowie Dokumentation qualitätsrelevanter Daten erreichen, und dies ungeachtet der rauhen Umgebungsbedingungen, z.B. Hitze, Staubanfall, Vibrationen, mechanische Beanspruchungen, spezifische Eigenschaften der Werkstückoberfläche und des Werkstoffes sowie Art und Ausprägung der Oberflächenfehler. Die Erfindung beruht hierbei auf der Erkenntnis, daß herkömmliche, aus der zerstörungsfreien Werkstoffprüftechnik bekannte Verfahren, die thermische und magnetische Wirkprinzipien nutzen oder auf Ultraschall-, Induktions- oder Laserbasis arbeiten, wegen der zuvor genannten speziellen Umgebungs- bzw. Einsatzbedingungen nicht anwendbar sind.

Das Bearbeiten der von dem Prozessor an den Rechner übermittelten Topologiedaten sofort im Vergleichs- und Auswertemodul, so daß das Ergebnis direkt in der koordinatenbezogenen Fehlerdatei abgelegt werden kann, bringt hierbei den Vorteil mit sich, daß die rechnerinterne Weiterbearbeitung nur noch auf die deutlich kleinere koordinatenbezogene Fehlerdatei zurückzugreifen braucht. Alternativ ist es stattdessen verfahrensmäßig möglich, die endgültige Klassifikation in einem folgenden Auswerteverfahren anhand der in die koordinatenbezogene Oberflächendatei eingegebenen Meßfehler vorzunehmen.

Allerdings bietet das Ablegen der im Vergleichs- und Auswertemodul bearbeiteten Topologiedaten sogleich in die koordinatenbezogene Fehlerdatei die Möglichkeit, die koordinatenbezogene Fehlerdatei On-Line mit dem Maschinen-Steuerstand zu verbinden, d.h. Bilder der Fehlerstellen sogleich in den Steuerstand zu übertragen.

Eine bevorzugte Ausgestaltung der Erfindung sieht vor, daß die koordinatenbezogene Fehlerdatei per Datenübertragung an die Maschinensteuerung übergeben wird, die die automatische Behandlung der Fehler umsetzt. Der maschinenbezogene Automatisierungsgrad kann allerdings grundsätzlich abhängig von den jeweiligen anwenderspezifischen Erfordernissen angepaßt werden. Hierbei bieten sich mehrere Möglichkeiten. So kann das Abbild der gesamten Oberflächentopologie auf einen hochauflösenden Bildschirm in der Bedienerkabine gegeben werden. Der Bediener kann dieses daraufhin inspizieren und nicht nur entscheiden, welche Fehler behandelt werden sollen, sondern die Fehlerstellen auch sogleich selbst anfahren. Stattdessen kann der Rechner dem Bediener auch nur Bilder der Fehlstellen und Angaben zu den Fehlerdimensionen und -positionen anbieten, worauf der Bediener wiederum auswählen und die Bearbeitung handgesteuert vornehmen kann. Die Fehlerstellen lassen sich gleichwohl auch automatisch anfahren und die Bearbeitung dabei entweder handgesteuert oder ebenfalls automatisch vornehmen.

Nach einem Vorschlag der Erfindung werden Fehlerart und -häufigkeit von einem im Rechner integrierten Statistikmodul erfaßt, wobei der Rechner die Fehlstellen selbst auswählt und die Abtragwerkzeuge der Abtragmaschine über die Maschinensteuerung zur automatischen Bearbeitung gezielt zum Einsatz bringt. Es liegt damit ein in jeder Beziehung vollautomatischer Prozeßablauf vor, bei dem das Statistikmodul die Kriterien definiert, die zur Auswahl der zu behandelnden Fehler dienen.

Die Oberflächenfehler werden somit beseitigt, indem die Bildinformation der Oberfläche von einem Prozessor aufbereitet, von einem Rechner eingelesen und in einer Datei abgespeichert werden; parallel kann auch eine On-Line-Übertragung auf einen Bildschirm in den Maschinenleitstand erfolgen. Hierbei wurde erkannt und umgesetzt, daß sich zur Sicherstellung der örtlichen Zuordnung von Fehler und Vorprodukt bzw. Werkstück in dem Rechner die Koordinate in Werkstücklängsrichtung (X-Position) aus einem Wegmeßsystem des hin- und herbeweglichen Arbeits- bzw. Ablagetisches der Abtragmaschine einspeisen und die Koordinate in Werkstückquerrichtung (Y-Position) durch Auswertung der Bildinformation gewinnen läßt. Dies deshalb, weil das Fehlersuchgerät bzw. die Inspektionseinheit die beiden Seitenkanten des Werkstückes aufnimmt und der Rechner in der Lage ist, die Breitenzuordnung (Y-Position) herzustellen. Die Datei beinhaltet daher die komplette Topologie des Werkstückes mit Bildinformationen in X, Y-Koordinaten.

Bei einer Vorrichtung zum Durchführen des Verfahrens, umfassend eine mit einem übergeordneten Rechner verbundene Abtragmaschine, insbesondere Schleifmaschine mit spanabhebenden Werkzeugen, z.B. Schleifscheiben, Hobelmesser oder Fräserwerkzeuge, einem Ablagetisch für die zu bearbeitenden Produkte und mindestens einem Fehlersuchgerät, ist erfindungsgemäß das Fehlersuchgerät als Inspektionseinheit ausgebildet, die mindestens eine Kamera und eine Beleuchtungseinrichtung aufweist, die an einer den Auflagetisch überspannenden Quertraverse angeordnet sind. Bei den zur optisch arbeitenden Oberflächeninspektion eingesetzten Komponenten bzw. Geräten kann es sich bei der Kamera um eine Flächen- oder Matrix- bzw. Zeilenkamera und bei der Beleuchtungseinrichtung um eine Blitzlichtanlage, einen Scheinwerfer oder dergleichen handeln, die das Inspektionsfeld optimal ausleuchten. Die Anzahl und Art der Kameras ist abhängig von der angestrebten Auflösung (Pixelanzahl) bei der Fehlererkennung - z.B. treten Risse mit Spaltbreiten von ca. 0,1 mm auf - und der Breite des Werkstückes. Das Lichtspektrum der Beleuchtungseinrichtung der Inspektionseinheit wird auf diese Verhältnisse angepaßt, und sollte eine Blitzlichtanlage zum Einsatz kommen, ist zu beachten, daß Blitzfrequenz und Bildverarbeitungsfrequenz (ca. 5 µs) aufeinander abgestimmt sind. Zudem ist das System so ausgelegt, daß alle an der Bildverarbeitung und -auswertung beteiligten Komponenten bei einer Geschwindigkeit des Bearbeitungs- bzw. Auflagetisches, z.B. Schleiftisch, oder des Supports der Abtragwerkzeuge (z.B. beim Hobeln oder Fräsen) von ca. 1 m/s eine hinreichend hohe Verarbeitungsgeschwindigkeit und Datenspeicherfähigkeit aufweisen.

Nach einer bevorzugten Ausgestaltung der Erfindung ist eine erste Inspektionseinheit vor und eine zweite Inspektionseinheit hinter der Abtragmaschine angeordnet. Hiermit wird ausgeglichen, daß sich die Inspektionseinheit nicht auf der - am Beispiel einer Schleifmaschine - Schleifscheibenachse anordnen läßt, d.h. der einzigen Position, die die komplette Werkstücklänge überstreicht, wenn sich das auf dem Schleiftisch ruhende Werkzeug während des Schleifvorgangs in Längsrichtung unter der Inspektionseinheit hindurch bewegt. Denn durch die Anordnung von zwei Inspektionseinheiten jeweils parallel zu dieser Achse läßt sich die Inspektion der Gesamtfläche sicherstellen. Hierbei empfiehlt es sich, die von den zwei Inspektionseinheiten bereitgestellten Daten einzelner Teilbereiche der Oberflächentopologie in einem Kombinationsmodul zur Gesamtdatei zu überlagern. Zudem bringen die außerhalb der Abtragmaschine bzw. einer diese einkapselnden Kabine angeordneten Inspektionseinheiten den Vorteil mit sich, daß sie nicht dem direkten Einfluß der Abtrag- bzw. Schleifbearbeitung (Funkenflug, verstärkter Staubanfall, besondere thermische Belastung, Vibrationen, Schleifscheibenbruch, etc.) ausgesetzt sind. Sollte es vorkommen, daß Werkstücke bzw. Vorprodukte bearbeitet werden, deren Länge kleiner dem Abstand zwischen der Schleifscheibenachse und der Inspektionseinheit ist, läßt sich in die Maschinensteuerung eine besondere Inspektionsfahrt integrieren. Die Schleif- bzw. Abtrag-Bearbeitung läßt sich im Sinne eines störungsfreien und sicheren Betriebes unterstützen, wenn das Vorprodukt vor der Inspektion durch eine mechanische Reinigung von losen Verschmutzungen, beispielsweise Schleifspäne, Abbrand, gelöste Anbackungen, etc. befreit oder die Oberfläche alternativ mit Preßluft abgeblasen oder abgesaugt wird.

Zur besseren Meßwerterfassung sollten bei einer mehrere Kameras aufweisenden Inspektionseinheit diese kaskadenartig angeordnet sein.

Eine weitere Ausgestaltung sieht vor, daß die Kamera mit einem optischen Filter versehen ist. Diese können auf das jeweilige Lichtspektrum angepaßt werden und den Einfluß von Störlicht (Beleuchtungskörper, glühende Funken) ausschließen.

Ein weiterer Vorschlag sieht vor, daß der Kamera und der Beleuchtungseinrichtung eine Schutzscheibe vorgeschaltet ist. Diese verhindert das Eindringen von Staub, Funken und Feuchtigkeit sowie Schäden durch mechanische Kontakte und stellt zudem ein leicht auswechselbares Verschleißteil dar.

Weiterhin wird vorgeschlagen, Kamera und Beleuchtungseinrichtung thermisch gekapselt und/oder gekühlt auszubilden. Dies dient zum Schutz vor der erheblichen Wärmestrahlung der gegebenenfalls sehr heißen Stranggießprodukte. Zur Kühlung eignen sich gasförmige (Luft, Stickstoff) oder flüssige (Wasser) Medien, die je nach den örtlichen Gegebenheiten zur Anwendung kommen können, wie es sich auch empfiehlt, die Leitungen zur Daten- und Energieübertragung durch eine entsprechende Isolierung zu schützen.

Weitere Merkmale und Vorteile der Erfindung ergeben sich aus den Patentansprüchen und der nachfolgenden Beschreibung, in der am Ausführungsbeispiel einer Schleifmaschine der Gegenstand der Erfindung näher erläutert ist. Es zeigen:
- Fig. 1: einen verfahrbaren Schleiffisch einer Schleifmaschine mit zugeordneter Inspektionseinheit, in der Vorderansicht (Teilfigur a) und in der Gesamtansicht (Teilfigur b), jeweils sehr schematisch dargestellt; und
- Fig. 2: die Schleifeinheit gemäß der Teilfigur 1b mit Rechnerverknüpfung zur automatischen Detektion von Oberflächenfehlern, schematisch als Blockschaltbild dargestellt.

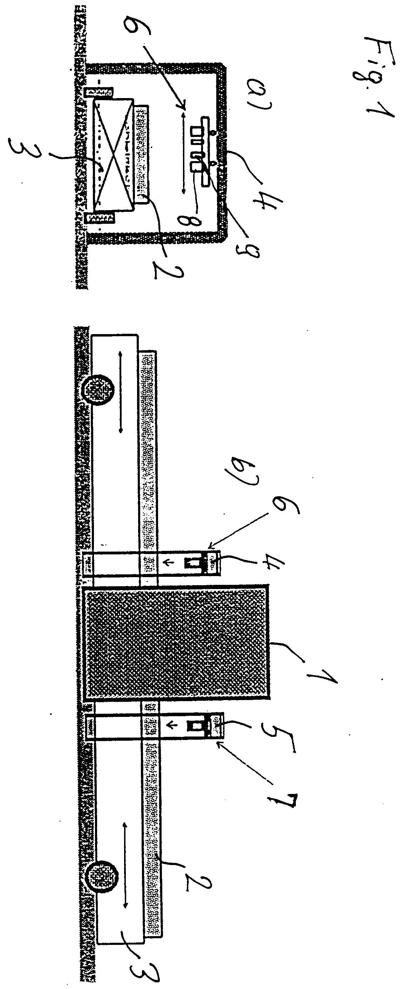

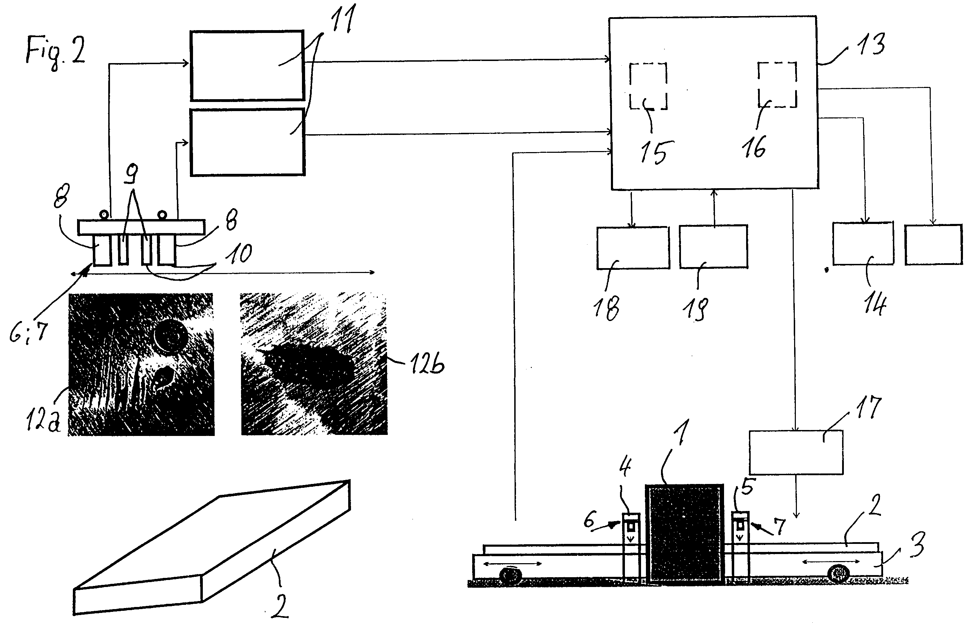

Eine im einzelnen nicht gezeigte, als solche hinlänglich bekannte Brammen-Schleifmaschine (vgl. z.B. die vorgenannte EP-B-0 053 274) weist mindestens eine Schleifscheibe auf, die nach außen hin eingekapselt in einer Schleifkabine 1 angeordnet ist. Das zu bearbeitende Werkstück, hier eine Bramme 2, ruht auf einem in Längsrichtung hin und her verfahrbaren Schleiftisch 3. Zu beiden Seiten der Schleifkabine 1 befindet sich eine den Schleiftisch 3 mit der Bramme 2 in Querrichtung überspannende Traverse 4 bzw. 5, an der eine mit Hilfe eines Linearantriebs quer verfahrbare erste bzw. zweite Inspektionseinheit 6 bzw. 7 angeordnet ist (vgl. Fig. 1b). Die Inspektionseinheiten 6, 7 bestehen im Ausführungsbeispiel aus zwei Kameras 8 und diesen zugeordneten Beleuchtungseinrichtungen 9 (vgl. Fig. 2), wobei sowohl die Kameras 8 als auch die Beleuchtungseinrichtungen 9 thermisch gekapselt und/oder gekühlt sowie mit einer vorgeschalteten Schutzscheibe 10 versehen sind.

Als Variante zu der vorbeschriebenen Tisch-Schleifmaschine kann auch eine Portalschleifmaschine eingesetzt werden, bei der das Werkstück auf stationären Vorrichtungen aufliegt und das Schleifportal reversierend das Werkstück in Längsrichtung überfährt.

Zur automatisierten, rechnergesteuerten logistischen Prozeßführung und -verfolgung sowie zur Dokumentation qualitätsrelevanter Daten sind den Inspektionseinheiten 6, 7 gemäß Fig. 2 Prozessoren 11 zugeordnet, die die mittels der Kameras 8 von der Oberfläche der Bamme 2 ermittelten Oberflächenfehler in Form von Bildinformationen 12a, 12b aufbereiten; diese die Topografie der Oberfläche der Bramme 2 wiedergebenden Daten werden von einem übergeordneten Rechner 13 eingelesen und in einer Datei 14 abgespeichert. Der Rechner 13 besitzt als integrierte Bestandteile ein Vergleichs- und Auswertemodul 15 und eine koordinatenbezogene Fehlerdatei 16; außerdem ist er mit der Maschinensteuerung 17 der Schleifmaschine verbunden.

In dem Vergleichs- und Auswertemodul 15 werden die digitalen Bildinformationen in einem Mustererkennungsprozeß mit abgespeicherten Bildern typischer Oberflächenfehler (vgl. die Bezugsziffern 12a und 12b in Fig. 2) verglichen und die Ergebnisse in der koordinatenbezogenen Fehlerdatei 16 gespeichert. Die Klassifikation hinsichtlich der Relevanz, z.B. Größe der Fehlerfläche, Fehlerlänge oder -breite, erfolgt in einem sich anschließenden Auswerteverfahren; alternativ können die an den Rechner übermittelten Topologiedaten sofort von dem Vergleichs- und Auswertemodell 15 bearbeitet und die Ergebnisse direkt in einer koordinatenbezogenen Oberflächendatei abgelegt werden. Der On-Line mit einem hochauflösbaren Bildschirm 18 in der Bedienerkabine verbundene Rechner 13 ermöglicht es, dem Bediener das Abbild der geamten Oberflächentopologie zu vermitteln, so daß dieser eine Inspektion vornehmen und zur anschließenden Fehlerbehandlung mittels einer Tastatur 19 die Schleifscheibe gezielt zum Einsatz bringen kann. Alternativ ist es möglich, nur Bilder der Fehlstellen anzubieten und die Fehlstellen von Hand oder automatisch anzufahren sowie die Bearbeitung handgesteuert oder automatisch durchzuführen, d.h. im Endeffekt einen vollautomatischen Inspektions- und Bearbeitungsprozeß durchzuführen.

## Patentansprüche

1. Verfahren zur automatischen Detektion von Oberflächenfehlern beim kontinuierlichen mechanischen Abtragen von Material von Stranggießprodukten, die in noch heißem Zustand in Teillängen unterteilt und vor der Fertigwalzung in einer Walzstraße einer Abtragmaschine, insbesondere Schleifmaschine, zugeführt werden, in der das Material des Stranggießproduktes abhängig von den von einem Fehlersuchgerät ermittelten Fehlerstellen an der bzw. den zu bearbeitenden Oberflächen mehr oder weniger intensiv abgetragen wird,
**dadurch gekennzeichnet,**
daß die Oberflächenfehler von dem Fehlersuchgerät als Bildinformationen einem Bildverarbeitungsprozessor zugeleitet und von einem an die Maschinensteuerung angeschlossenen übergeordneten, ein integriertes Vergleichs- und Auswertemodul besitzenden Rechner eingelesen werden, in dem die übermittelten digitalen Bildinformationen in einem Mustererkennungsprozeß mit abgespeicherten Bildern typischer Oberflächenfehler verglichen und die Ergebnisse wie Fehlerlänge und -breite sowie Fehlerfläche entweder direkt bearbeitet und nach einer Klassifikation hinsichtlich der Relevanz der Oberflächenfehler in einer koordinatenbezogenen Fehlerdatei gespeichert werden oder nach dem Speichern in eiiner Oberflächendatei in einem folgenden Auswerteverfahren klassifiziert werden.

2. Verfahren nach Anspruch 1,
**dadurch gekennzeichnet,**
daß die koordinatenbezogene Fehlerdatei per Datenübertragung an die Maschinensteuerung übergeben wird, die die automatische Behandlung der Fehler umsetzt.

3. Verfahren nach Anspruch 1 oder 2,
**dadurch gekennzeichnet,**
daß Fehlerart und -häufigkeit von einem im Rechner integrierten Statistikmodul erfaßt werden, wobei der Rechner die Fehlstellen selbst auswählt und die Abtragwerkzeuge der Abtragmaschine über die Maschinensteuerung zur automatischen Bearbeitung gezielt zum Einsatz bringt.

4. Verfahren nach Anspruch 1,
**dadurch gekennzeichnet,**
daß die koordinatenbezogene Fehlerdatei On-Line mit dem Maschinen-Steuerstand verbunden wird.

5. Vorrichtung zum Durchführen des Verfahrens nach Anspruch 1, umfassend eine mit einem übergeordneten Rechner (13) verbundene Abtragmaschine, insbesondere Schleifmaschine, mit spanabhebenden Werkzeugen, z.B. Schleifscheiben, Hobelmesser oder Fräserwerkzeuge, einen Auflagetisch (3) für die zu bearbeitenden Produkte (2) und mindestens ein Fehlersuchgerät (6 bzw. 7), wobei der Rechner (13) mit der Maschinensteuerung (17) verbunden ist,
**dadurch gekennzeichnet,**
daß das Fehlersuchgerät als Inspektionseinheit (6; 7) ausgebildet ist, die mindestens eine Kamera (8) und eine Beleuchtungseinrichtung (9) aufweist, die an einer den Auflagetisch (3) überspannenden Quertraverse (4) angeordnet sind, und die Inspektionseinheit (6;7) an den ein Vergleichs- und Auswertemodul (15) sowie eine koordinatenbezogene Fehlerdatei (16) besitzenden Rechner (13) angeschlossen ist.

6. Vorrichtung nach Anspruch 5,
**dadurch gekennzeichnet,**
daß eine erste Inspektionseinheit (6) vor und eine zweite Inspektionseinheit (7) hinter der Abtragmaschine angeordnet ist.

7. Vorichtung nach Anspruch 5 oder 6,
**dadurch gekennzeichnet,**
daß mehrere Kameras (8) kaskadenartig angeordnet sind.

8. Vorrichtung nach einem der Ansprüche 5 bis 7,
**dadurch gekennzeichnet,**
daß die Kamera (8) mit einem optischen Filter versehen ist.

9. Vorrichtung nach einem der Ansprüche 5 bis 8,
**dadurch gekennzeichnet,**
daß die Inspektionseinheit (6; 7) verfahrbar an der Quertraverse (4) angeordnet ist.

10. Vorrichtung nach einem der Ansprüche 5 bis 9,
**dadurch gekennzeichnet,**
daß der Kamera (8) und der Beleuchtungseinrichtung (9) eine Schutzscheibe (10) vorgeschaltet ist.

11. Vorrichtung nach einem der Ansprüche 5 bis 10,
**dadurch gekennzeichnet,**
daß Kamera (8) und Beleuchtungseinrichtung (9) thermisch gekapselt und/oder gekühlt sind.
